# EUROPÄISCHE PATENTANMELDUNG

(11) **EP 4 847 785 A2**
(43) Veröffentlichungstag der Anmeldung: **02.12.2026**
(21) Anmeldenummer: 26212254.2
(22) Anmeldetag: 15.10.2026
(51) Int. Cl.: F04D 19/04, F04D 27/00, F04D 29/058

(54) **VAKUUMPUMPE**

(71) Anmelder: Pfeiffer Vacuum Technology AG, 35614 Asslar (DE)
(72) Erfinder: HUTTERER, Markus, 2452 Mannersdorf (AT)
(74) Vertreter: Manitz Finsterwald Patent- und Rechtsanwaltspartnerschaft mbB

(57) **Zusammenfassung**

Eine Vakuumpumpe umfasst einen Rotor, ein aktives Magnetlager und eine Positionsregelung, die mit dem aktiven Magnetlager in funktionaler Verbindung steht, um den Rotor während des Betriebs der Vakuumpumpe mittels des aktiven Magnetlagers in einer vorbestimmten räumlichen Lage zu halten. Die Positionsregelung regelt mindestens einen Regelstrom für das Magnetlager derart, dass eine Stromkomponente eines Soll-Regelstroms in mindestens einem vorbestimmten Frequenzbereich reduziert ist. Ferner umfasst die Positionsregelung ein Kompensationsmodul, das mindestens ein gemessenes Positionssignal für eine Position des Rotors empfängt, eine Positionskomponente des Positionssignals in dem vorbestimmten Frequenzbereich extrahiert und anhand der extrahierten Positionskomponente ein Stromsignal zur Kompensation von Kraftkomponenten innerhalb des Magnetlagers berechnet.

## Beschreibung

Die Erfindung betrifft eine Vakuumpumpe, die insbesondere als eine Turbomolekularpumpe ausgebildet ist, mit einem aktiven Magnetlager und einer Positionsregelung für einen Rotor der Vakuumpumpe innerhalb des aktiven Magnetlagers.

Bestimmte Vakuumpumpen, beispielsweise Turbomolekularpumpen, und andere Vorrichtungen weisen aktive Magnetlager auf, um einen Rotor oder eine Turbine der Vakuumpumpe bzw. Vorrichtung berührungslos zu lagern. Mittels des aktiven Magnetlagers wird der Rotor bzw. die Turbine in einer vorbestimmten räumlichen Lage gehalten.

Zu diesem Zweck umfasst die Vakuumpumpe bzw. die Vorrichtung ein Positionsmesssystem, mit dem die momentane räumliche Lage des Rotors oder der Turbine gemessen und erfasst wird, um die gemessene räumliche Lage des Rotors oder der Turbine als Istwert für eine Positionsregelung des aktiven Magnetlagers zu verwenden. Die Positionsregelung regelt beispielsweise Ströme durch Spulen des aktiven Magnetlagers aktiv auf eine solche Weise, dass der Rotor bzw. die Turbine in einer vorbestimmten räumlichen Lage bleibt, d.h. bei einem vorbestimmten Sollwert für die Position oder die räumliche Lage des Rotors bzw. der Turbine bezogen auf das aktive Magnetlager.

Aufgrund der Kräfte, welche die Spulen des Lagers jeweils auf den Rotor oder die Turbine ausüben, hält die Regelung des aktiven Magnetlagers somit den Istwert der räumlichen Lage des Rotors bzw. der Turbine bei einem vorgegebenen Sollwert. Die räumliche Lage des Rotors oder der Turbine soll dadurch auch bei Störungen zuverlässig gehalten werden. Solche Störungen können beispielsweise durch variierende Lasten hervorgerufen werden. Ferner soll der Rotor oder die Turbine auch bei Modellungenauigkeiten, beispielsweise aufgrund von Ungenauigkeiten des mechanischen Systems, in welches das aktive Magnetlager und der Rotor bzw. die Turbine eingebunden sind, bei der Sollposition gehalten werden können.

Bekannte Positionsregelungen von Turbomolekularpumpen oder Turbinen weisen zwar eine hohe Regelgüte auf und stellen ausreichende Stabilitätsreserven bereit. Dennoch können bei hohen Drehzahlen des Rotors der Turbomolekularpumpe oder der Turbine Unwuchtkräfte auftreten und zu einer Sättigung von Aktuatoren der Positionsregelung führen.

Daher umfassen bekannte Positionsregelungen spezielle Unwuchtregelungen, mit denen beispielsweise synchrone Lagerkräfte verringert werden können. Die synchronen Lagerkräfte umfassen bei Turbomolekularpumpen oder Turbinen dynamische Kraftkomponenten innerhalb des Lagersystems, deren Frequenz mit der Drehfrequenz bzw. Drehzahl des Rotors übereinstimmt. Ursache für die synchronen Lagerkräfte ist hauptsächlich eine mechanische Restunwucht des Rotors, wenn sich dieser mit hoher Drehzahl dreht. Die synchronen Lagerkräfte können die maximal erreichbare Drehzahl des Rotors begrenzen.

Daher ist bei bekannten Positionsregelungen vorgesehen, solche synchronen Lagerkräfte zu verringern oder zu beseitigen, indem synchrone Aktuatorströme der Positionsregelung verringert oder beseitigt werden. Durch die Verringerung der Aktuatorströme werden die Lagerkräfte meistens ebenfalls verringert, die auf ein Gehäuse der Turbomolekularpumpe bzw. Turbine übertragen werden und unerwünschte Vibrationen hervorrufen können. Es hat sich jedoch herausgestellt, dass die ausschließliche Beseitigung der synchronen Aktuatorströme noch nicht zu einer vollständigen Beseitigung der synchronen Lagerkräfte und der durch diese hervorgerufenen Vibrationen führt.

Eine Aufgabe der Erfindung besteht darin, eine Vakuumpumpe und Verfahren für den Betrieb einer solchen zu schaffen, bei denen Lagerkräfte während des Betriebs der Vakuumpumpe minimiert sind.

Diese Aufgabe wird durch eine Vakuumpumpe und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Die erfindungsgemäße Vakuumpumpe, bei der es sich insbesondere um eine Turbomolekularpumpe handelt, umfasst einen Rotor, ein aktives Magnetlager und eine Positionsregelung, die mit dem aktiven Magnetlager in funktionaler Verbindung steht, um den Rotor während des Betriebs der Vakuumpumpe mittels des aktiven Magnetlagers in einer vorbestimmten räumlichen Lage zu halten.

Die Positionsregelung regelt mindestens einen Regelstrom für das Magnetlager derart, dass eine Stromkomponente eines Soll-Regelstroms in mindestens einem vorbestimmten Frequenzbereich reduziert ist. Ferner umfasst die Positionsregelung ein Kompensationsmodul, das mindestens ein gemessenes Positionssignal für eine Position des Rotors empfängt, eine Positionskomponente des Positionssignals in dem vorbestimmten Frequenzbereich extrahiert und anhand der extrahierten Positionskomponente ein Stromsignal zur Kompensation von Kraftkomponenten innerhalb des Magnetlagers berechnet.

Die Positionsregelung weist somit einen Haupt-Regelungspfad auf, mit dem die Stromkomponente des Soll-Regelstroms innerhalb des mindestens einen vorbestimmten Frequenzbereich derart reduziert wird, dass entsprechende Kraftkomponenten ebenfalls reduziert werden und Vibrationen, die durch die Kraftkomponenten entstehen könnten, verringert werden. Die Stromkomponente des Soll-Regelstroms in dem mindestens einen vorbestimmten Frequenzbereich umfasst insbesondere eine synchrone Stromkomponente und/oder höhere Harmonische der synchronen Stromkomponente. Die synchrone Stromkomponente weist eine Frequenz auf, die mit der Drehfrequenz bzw. Drehzahl des Rotors der Vakuumpumpe nahezu exakt übereinstimmt.

Der Haupt-Regelungspfad zum Reduzieren bzw. Beseitigen der Stromkomponente des Soll-Regelstroms in dem vorbestimmten Frequenzbereich bzw. zum Reduzieren oder gar Beseitigen der synchronen Stromkomponente bzw. deren höherer Harmonischer verwendet somit das Prinzip des sogenannten Current-Nullings. Wie bereits erwähnt, können durch das Current-Nulling Lagerkräfte verringert und unerwünschte Schwingungen innerhalb der Vakuumpumpe gedämpft werden.

Wie eingangs erwähnt, können jedoch trotz des Reduzierens der Stromkomponente des Soll-Regelstroms weiterhin Lagerkräfte auftreten, die zu unerwünschten Vibrationen eines Gehäuses der Vakuumpumpe führen können. Daher umfasst die Positionsregelung mittels des Kompensationsmoduls einen zusätzlichen Regelungspfad, der beispielsweise parallel zu solchen Komponenten bzw. Modulen der Positionsregelung arbeitet, die das vorstehend erwähnte Current-Nulling durchführen. Der zusätzliche Regelungspfad basiert auf dem gemessenen Positionssignal für den Rotor, anhand dessen die Positionskomponente innerhalb des vorbestimmten Frequenzbereichs bzw. eine synchrone Positionskomponente abgeleitet wird, um das Stromsignal zur Kompensation der Kraftkomponenten zu berechnen, insbesondere zur Kompensation harmonischer Kraftkomponenten, die auch bei einer nahezu vollständigen Beseitigung der synchronen Stromkomponente auftreten können, beispielsweise aufgrund eines Biasstroms in Spulen des Magnetlagers in Verbindung mit einem drehzahlsynchronen Orbit des Rotors, was zu einem nichtlinearen Zusammenhang zwischen den Positionskomponenten und den Kraftkomponenten führen kann.

Das berechnete Stromsignal wird mit dem Stromsignal des Current-Nullings kombiniert bzw. diesem aufgeprägt, um dadurch die Lagerkräfte weiter zu verringern bzw. sogar ganz zu eliminieren. Mit anderen Worten bewirkt die Verwendung des zusätzlichen Regelungspfads mit dem Kompensationsmodul im Vergleich zu der ausschließlichen Verwendung des Current-Nullings eine weitere Verringerung der Lagerkräfte.

Gemäß einer Ausführungsform kann die Positionsregelung einen Positionscontroller und einen Stromcontroller umfassen, die sequentiell miteinander in Verbindung stehen. Das Kompensationsmodul kann parallel zu dem Positionscontroller geschaltet sein, um einen parallelen Regelungspfad zu erzeugen. Der Stromcontroller kann eine kombinierte Ausgabe des Positionscontrollers und des parallelen Regelungspfades empfangen.

Mittels des Positionscontrollers und des Stromcontrollers kann somit das vorstehend beschriebene Current-Nulling entlang des Haupt-Regelungspfades durchgeführt werden. Das Kompensationsmodul kann derart parallel zu dem Positionscontroller geschaltet sein, dass es ebenso wie dieser Istwerte eines Positionssignals des Rotors empfängt und das Stromsignal zur Kompensation harmonischer Kraftkomponenten ausgibt. Der Stromcontroller kombiniert anschließend das Stromsignal mit der Ausgabe des Positionscontrollers, um dadurch zusätzlich Vibrationen des Rotors zu verringern.

Gemäß einer weiteren Ausführungsform kann das Stromsignal vordefinierte Phasenverschiebungen und vordefinierte Verstärkungen umfassen, um anhand der Phasenverschiebungen und Verstärkungen jeweilige Verzögerungen bei der Messung des Positionssignals und bei der Anwendung des Signals des Regelstroms auszugleichen. Durch die Berücksichtigung der Phasenverschiebungen und Verstärkungen kann somit die Kompensation der harmonischen Kraftkomponenten innerhalb des Magnetlagers verbessert werden. Umgekehrt betrachtet könnten die Verzögerungen bei der Messung des Positionssignals und bei der Anwendung des Signals des Regelstroms zu Ungenauigkeiten bei der Berechnung des Stromsignals und dadurch zu weiterhin vorhandenen Vibrationen des Gehäuses der Vakuumpumpe führen. Dies kann durch die Phasenverschiebungen und Verstärkungen verhindert werden, die empirisch und individuell für jeden Typ der Vakuumpumpe bzw. Turbomolekularpumpe ermittelt werden können.

Das Kompensationsmodul kann die Phasenverschiebungen mittels einer Rotationsmatrix und die Verstärkungen mittels einer Verstärkungsmatrix darstellen. Die Verstärkungsmatrix kann insbesondere als eine diagonale Matrix dargestellt werden. Mittels der Rotationsmatrix und der Verstärkungsmatrix können die Phasenverschiebungen und Verstärkungen zum Ausgleichen der vorstehend beschriebenen Verzögerungen mit geringem Aufwand und daher auf kosteneffiziente Weise berücksichtigt werden. Dadurch lässt sich die Anwendung von Filtern zur Kompensation von Eingangs- und Ausgangsdynamiken vermeiden, welche die vorstehend beschriebenen Verzögerungen hervorrufen würden.

Die Rotationsmatrix und die Verstärkungsmatrix können anpassbar sein, um den Einfluss zusätzlicher Schwingungsquellen zu berücksichtigen. Die zusätzlichen Schwingungsquellen können einen elektrischen Motor der Vakuumpumpe und Abweichungen durch Fertigungstoleranzen in den Sensoren, beispielsweise in Positionssensoren für die Position des Rotors, und an Oberflächen entsprechender Aktuatoren des aktiven Magnetlagers umfassen. Diese Schwingungsquelle können zusätzlich zu den restlichen synchronen Kraftkomponenten, die nicht durch das Current-Nulling kompensiert werden, Vibrationen innerhalb der Vakuumpumpe erzeugen. Durch die Berücksichtigung zusätzlicher Schwingungsquellen in der Rotationsmatrix und der Verstärkungsmatrix können somit unerwünschte Vibrationen während des Betriebs der Vakuumpumpe weiter verringert werden.

Das Kompensationsmodul kann ferner ausgebildet sein, eine jeweilige zusätzliche Schwingungsquelle experimentell zu identifizieren und die Rotationsmatrix sowie die Verstärkungsmatrix anhand optimierter Parameter anzupassen, die für die jeweils identifizierte zusätzliche Schwingungsquelle ermittelt werden. Eine solche experimentelle Identifikation von Schwingungsquellen und die Optimierung von Parametern sowie deren Anwendung innerhalb des Kompensationsmoduls bzw. bei der Berechnung der Rotationsmatrix und der Verstärkungsmatrix können für die jeweilige Vakuumpumpe individuell bzw. systemspezifisch erfolgen. Für die Optimierung der Parameter kann beispielsweise ein numerischer Ansatz anhand eines nichtlinearen Finite-Elemente-Modells verwendet werden. Eine solche individuelle Anpassung der jeweiligen Vakuumpumpe kann beispielsweise auf einem speziellen Prüfstand durchgeführt werden.

Die Vakuumpumpe kann ferner mindestens einen Schwingungssensor umfassen, der vorzugsweise an einer jeweiligen Referenzposition in oder an der Vakuumpumpe angebracht ist und ein Schwingungssignal ausgibt. Die Rotationsmatrix und die Verstärkungsmatrix können während eines Betriebs der Vakuumpumpe anhand des Schwingungssignals anpassbar sein. Die mindestens eine Referenzposition kann eine Position in oder an der Vakuumpumpe sein, beispielsweise eine oder mehrere Positionen an deren Gehäuse, an denen die Schwingungen unerwünscht sind und daher reduziert und bestenfalls beseitigt werden sollen. Alternativ oder zusätzlich können ein oder mehrere Schwingungssensoren an einer Applikation angebracht sein, die der Vakuumpumpe zugeordnet ist. Der eine oder die mehreren Schwingungssensoren bilden jedoch auch bei dieser Ausführungsform einen Teil der Vakuumpumpe, da sie mit dieser bzw. deren Steuereinheit funktional verbunden sind.

Parameter der Rotationsmatrix und der Verstärkungsmatrix werden bei dieser Ausführungsform mit Schwingungssensor folglich nicht fest vorgegeben, wie dies beispielsweise durch eine einmalige Messung zu Beginn des Betriebs der Vakuumpumpe erfolgen kann. Stattdessen können die Parameter der Rotationsmatrix und der Verstärkungsmatrix während des Betriebs der Vakuumpumpe beispielsweise kontinuierlich oder nach vorbestimmten Zeitintervallen erneut an den laufenden Betrieb der Vakuumpumpe angepasst werden. Dadurch kann die Zuverlässigkeit der Rotationsmatrix und der Verstärkungsmatrix verbessert werden.

Das Kompensationsmodul kann ferner mindestens zwei gemessene Positionssignale empfangen und eine Transformationsmatrix auf die gemessenen Positionssignale anwenden. Eine solche Transformationsmatrix ist insbesondere dann erforderlich, wenn sich Sensoren und jeweils zugeordnete Aktuatoren bzw. Magnetlagerelemente nicht an derselben Position innerhalb des aktiven Magnetlagers befinden, sondern eine Positionsabweichung aufweisen. Die Transformationsmatrix kann eine solche Positionsabweichung berücksichtigen bzw. kompensieren.

Wenn die Vakuumpumpe als Turbomolekularpumpe mit einem aktiven Magnetlager ausgebildet ist, kann dieses als ein System mit fünf Freiheitsgraden beschrieben werden, von denen einer eine Bewegung entlang einer axialen Achse umfasst, die von den Bewegungen entlang radialer Achsen entkoppelt ist. Das Kompensationsmodul zum Berechnen des Stromsignals, das Kraftkomponenten innerhalb des Magnetlagers kompensiert, kann bei einer solchen Turbomolekularpumpe hauptsächlich auf das radiale Teilsystem des Magnetlagers mit vier Freiheitsgraden angewendet werden. Innerhalb eines solchen radialen Teilsystems können vier Positionssignale gemessen werden, d.h. mittels jeweiliger Positionssensoren, und mittels der Transformationsmatrix in jeweilige Aktuatorverschiebungen umgerechnet werden, die wiederum die Grundlage zur Berechnung jeweiliger Stromsignale für die vier Freiheitsgrade des radialen Teilsystems bilden können. Ferner kann das Verfahren unter Verwendung des Kompensationsmoduls prinzipiell ebenso auf das axiale Teilsystem des Magnetlagers angewendet werden.

Das Kompensationsmodul kann ferner ein Bandpassfilter umfassen. Mittels des Bandpassfilters können harmonische Signalanteile des gemessenen Positionssignals oder des transformierten Positionssignals, auf das die Transformationsmatrix angewendet wurde, extrahiert werden. Dadurch wird die Kompensation der harmonischen Kraftkomponenten zwar auf die harmonischen Signalanteile beschränkt. Dies führt jedoch zu einer verbesserten Stabilität des geschlossenen Regelkreises innerhalb der Positionsregelung. Um eine Anregung flexibler Moden und eine entsprechende Destabilisierung zu verhindern, kann die Kompensation somit ausschließlich innerhalb eines schmalen Frequenzbandes angewendet werden.

Gemäß einer weiteren Ausführungsform kann die Positionsregelung ferner einen Induktivitäts-Regelungspfad umfassen, der eine positionsabhängige Induktivität von Aktuatoren innerhalb des aktiven Magnetlagers berücksichtigt. Die positionsabhängige Induktivität der Aktuatoren bzw. Lagerelementen des Magnetlagers kann bei hohen Drehzahlen des Rotors auch unter Verwendung des vorstehend beschriebenen Current-Nullings harmonische Stromanteile hervorrufen, die wiederum entsprechende Vibrationen bewirken können. Mittels des Induktivitäts-Regelungspfades der Positionsregelung können solche harmonischen Stromanteile aufgrund der positionsabhängigen Induktivität identifiziert und kompensiert werden.

Der Induktivitäts-Regelungspfad kann mindestens einen Resonanzregler umfassen. Ein solcher Resonanzregler kann zur Unterdrückung drehzahlsynchroner Ströme innerhalb der Positionsregelung besonders geeignet sein, da er sich theoretisch als ein Regler mit unendlicher Verstärkung bei der Drehfrequenz des Rotors implementieren lässt. Eine solche ideale Übertragungsfunktion eines Resonanzreglers mit nahezu unendlicher Verstärkung kann jedoch zu Stabilitätsproblemen führen. Daher können in der Praxis verallgemeinerte Ausführungen des Resonanzreglers mit vordefinierter Verstärkung verwendet werden.

Ferner kann der Resonanzregler eine zusätzliche Dämpfung umfassen. Dadurch kann die Robustheit des Resonanzreglers erhöht werden.

Der Induktivitäts-Regelungspfad kann als Eingangssignal einen Istwert mindestens eines Stroms oder eine Regeldifferenz mindestens eines Stroms innerhalb des Magnetlagers empfangen. Wenn der Istwert des mindestens einen Stroms verwendet wird, kann die synchrone Komponente des Istwerts bzw. Rückführungssignals bei der Drehfrequenz des Rotors theoretisch unendlich verstärkt und dadurch kompensiert werden. Wenn hingegen die Regeldifferenz des mindestens einen Stroms innerhalb des Magnetlagers verwendet wird, kann ein ideales Führungsverhalten für den Rotor bei dessen Drehfrequenz erreicht werden.

Weiterer Gegenstand der Erfindung ist ferner ein Verfahren zum Regeln einer Position eines Rotors einer Vakuumpumpe, insbesondere einer Turbomolekularpumpe, wobei die Vakuumpumpe den Rotor, ein aktives Magnetlager und eine Positionsregelung für den Rotor umfasst und mit dem Magnetlager in einer funktionalen Verbindung steht. Gemäß dem Verfahren wird der Rotor während des Betriebs der Vakuumpumpe mittels des Magnetlagers und der Positionsregelung in einer vorbestimmten räumlichen Lage gehalten. Mindestens ein Regelstrom für das Magnetlager wird mittels der Positionsregelung derart geregelt, dass eine Stromkomponente eines Soll-Regelstroms in mindestens einem vorbestimmten Frequenzbereich reduziert wird. In einem Kompensationsmodul der Positionsregelung wird ferner mindestens ein gemessenes Positionssignal für eine Position des Rotors empfangen, eine Positionskomponente des Positionssignals in dem vorbestimmten Frequenzbereich extrahiert und anhand der extrahierten Positionskomponente ein Stromsignal zur Kompensation von Kraftkomponenten innerhalb des Magnetlagers berechnet.

Das Verfahren ist folglich für den Betrieb der vorstehend beschriebenen Vakuumpumpe vorgesehen. Daher gelten für das Verfahren die Ausführungen zur Vakuumpumpe entsprechend, und dies gilt insbesondere hinsichtlich der Vorteile und der bevorzugten Ausführungsformen. Ferner versteht es sich, dass sämtliche hierin genannten Merkmale miteinander kombinierbar sind, sofern nicht explizit etwas Gegenteiliges angegeben ist.

Gemäß einer Ausführungsform des Verfahrens wird das Stromsignal unter Berücksichtigung vordefinierter Phasenverschiebungen und vordefinierter Verstärkungen berechnet, um anhand der Phasenverschiebungen und Verstärkungen jeweilige Verzögerungen bei der Messung des Positionssignals und bei einer Anwendung des Signals des Regelstroms auszugleichen. Insbesondere werden die Phasenverschiebungen mittels einer Rotationsmatrix und die Verstärkungen mittels einer Verstärkungsmatrix repräsentiert bzw. innerhalb des Kompensationsmoduls dargestellt.

Die Rotationsmatrix und die Verstärkungsmatrix können angepasst werden, um den Einfluss zusätzlicher Schwingungsquellen zu berücksichtigen. Insbesondere kann eine jeweilige zusätzliche Schwingungsquelle experimentell identifiziert werden, und die Rotationsmatrix sowie die Verstärkungsmatrix können anhand optimierter Parameter angepasst werden, die für die jeweils identifizierte zusätzliche Schwingungsquelle ermittelt werden.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine beispielhafte Draufsicht auf ein Magnetlager einer Vakuumpumpe,
- Fig. 2: Diagramme mit harmonischen Komponenten von Kräften innerhalb des Magnetlagers,
- Fig. 3: ein Diagramm, das eine Kompensation einer harmonischen Komponente veranschaulicht,
- Fig. 4: ein Aktivmagnetlager-System mit fünf Freiheitsgraden,
- Fig. 5: ein jeweiliges Blockdiagramm einer idealen und einer realen Kraftkompensation sowie einer entsprechenden Positionsregelung,
- Fig. 6: Diagramme, die Ergebnisse der Kraftkompensation veranschaulichen
- Fig. 7: ein Blockdiagramm, das die Anpassung der Kraftkompensation veranschaulicht, und
- Fig. 8: ein Diagramm und ein Blockdiagramm für einen zusätzlichen Regelungspfad.

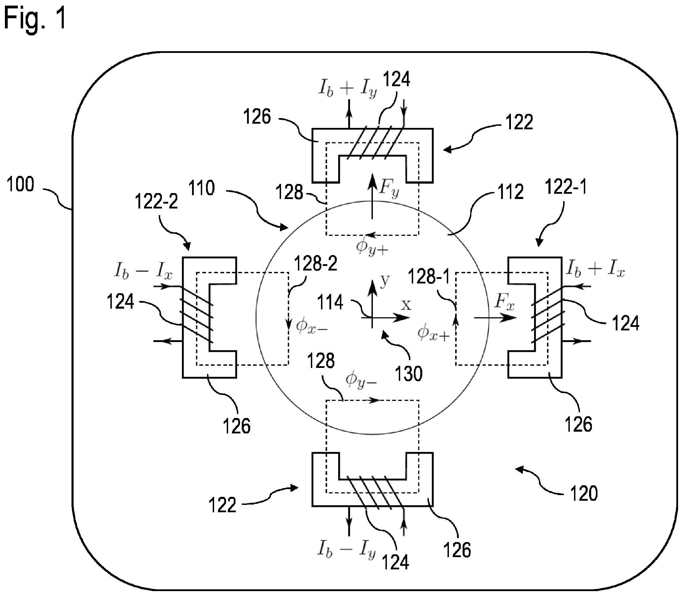

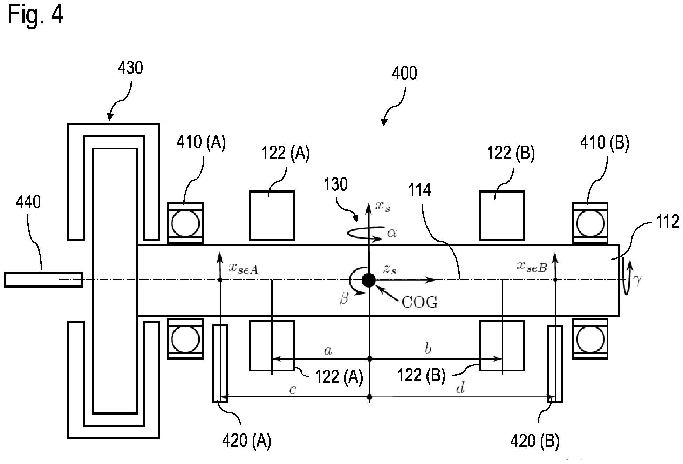

Fig. 1 zeigt schematisch eine Draufsicht auf eine Vakuumpumpe 100, die als Turbomolekularpumpe ausgestaltet ist. Die Vakuumpumpe 100 umfasst einen Rotor 110 mit einer Rotorwelle 112. Der Rotor 110 und die Rotorwelle 112 drehen sich im Betrieb der Vakuumpumpe 100 um eine Drehachse 114 (vgl. auch Fig. 4), die zentral innerhalb der Rotorwelle verläuft und eine axiale Richtung innerhalb der Vakuumpumpe 100 festlegt. Ferner umfasst die Vakuumpumpe 100 ein aktives Magnetlager 120.

Das aktive Magnetlager 120 ist in Fig. 1 derart vereinfacht dargestellt, dass es mehrere Lagerelemente in der Form von Elektromagneten 122 umfasst, die jeweils eine Magnetspule 124 und einen Kern 126 aufweisen. Bei einem realen Magnetlager sind die Wicklungen der jeweiligen Elektromagnete 122 jedoch meist auf einem gemeinen Stator bzw. Kern angeordnet, so dass das reale Magnetlager streng genommen keine voneinander getrennten Lagerelemente aufweist. Die Aufteilung in Lagerelemente bzw. Elektromagnete 122 stellt jedoch eine praktische Näherung als Grundlage für die nachstehenden Erläuterungen dar.

Jeder der Elektromagnete 122 erzeugt während des Betriebs der Vakuumpumpe 100 einen magnetischen Fluss 128, über den das aktive Magnetlager 120 mit dem Rotor 110 bzw. der Rotorwelle 112 wechselwirkt. Dadurch wird der Rotor 110 während des Betriebs der Vakuumpumpe 100 mittels des aktiven Magnetlagers 120 in einer vorbestimmten räumlichen Position gehalten.

In Fig. 1 sind vier radiale Elektromagnete bzw. Lagerelemente 122 in einem Koordinatensystem 130 der Vakuumpumpe 100 dargestellt. In Fig. 1 sind eine x-Achse und eine y-Achse des Koordinatensystems 130 zu erkennen, die sich jeweils in einer radialen Richtung senkrecht zu der axialen Richtung erstrecken, die durch die Drehachse 114 des Rotors 110 festgelegt ist. Da die Elektromagnete bzw. Lagerelemente 122 die aktiven Elemente des Magnetlagers 120 darstellen, werden diese im Folgenden auch als Aktuatoren bezeichnet.

Im Folgenden soll zunächst beispielhaft ein Freiheitsgrad des aktiven Magnetlagers 120 entlang der x-Achse des Koordinatensystems 130 betrachtet werden. Die resultierende Kraft Fₓ in der x-Richtung setzt sich aus einer Überlagerung von Kräften F_{x,up} und F_{x,low} zusammen. Die Kraft F_{x,up} wird durch die obere Flusskomponente 128-1 bzw. Φₓ₊ erzeugt, während die Kraft F_{x,low} durch die untere Flusskomponente 128-2 bzw. Φₓ₋ erzeugt wird. Die obere bzw. untere Flusskomponenten 128-1, 128-2 werden jeweils durch den entsprechenden Lagerelemente bzw. Elektromagneten 122-1, 122-2 generiert.

Für die resultierende Kraft Fₓ (vgl. Fig. 1) in x-Richtung gilt: ${F}_{x} = {F}_{x , up} - {F}_{x , low}$ (1)

Die jeweiligen Beträge des oberen Lagerelements 122-1 bzw. des unteren Lagerelements 122-2 zur resultierenden Kraft Fₓ sind folgendermaßen gegeben: ${F}_{x , up} = k \frac{{\left({I}_{b}+{I}_{x}\right)}^{2}}{{\left({δ}_{0}-x\right)}^{2}} und {F}_{x , low} = k \frac{{\left({I}_{b}-{I}_{x}\right)}^{2}}{{\left({δ}_{0}+x\right)}^{2}}$ (2) k ist eine definierte Aktuatorkonstante, I_{b} ist ein Biasstrom durch die jeweilige Spule 124, Iₓ ist der Regelstrom durch die jeweilige Spule 124, δ₀ ist eine Spaltbreite zwischen der Rotorwelle 112 und dem jeweiligen Elektromagneten 122 im Gleichgewichtszustand, und x ist eine Verschiebung in x-Richtung während der Regelung der Position des Rotors 110 bzw. der Rotorwelle 112.

Wenn sich der Rotor 110 im Betrieb der Vakuumpumpe 100 mit einer Drehfrequenz Ω dreht, kann die Regelung seiner Position drehzahlsynchrone Kraftkomponenten erzeugen, die im Folgenden betrachtet werden sollen. Drehzahlsynchron bedeutet hier und im Folgenden bei Strömen und Kräften, dass die Frequenz des jeweiligen Stroms bzw. der jeweiligen Kraftkomponente mit der Drehfrequenz Ω bzw. Drehzahl des Rotors 110 übereinstimmt. Die drehzahlsynchrone Verschiebung des Rotors in x-Richtung aufgrund der Regelung der Position der Rotors 110 kann mittels einer harmonischen Schwingung mit der Drehfrequenz Ω beschrieben werden, wie dies nachstehend dargestellt ist.

Das Magnetlager 120 wird während des Betriebs der Vakuumpumpe 100 zunächst derart betrieben, dass drehzahlsynchrone Anteile von Strömen durch die Spulen 124 möglichst weit reduziert sind, um dadurch Vibrationen des Rotors 110 zu verringern. Drehzahlsynchrone Anteile der Kräfte sind jedoch weiterhin vorhanden Im Allgemeinen gilt zunächst für die drehzahlsynchrone Kraftkomponente F_{x,up}: ${F}_{x , up} = k \frac{{\left({I}_{b}+{\hat{I}}_{x}cos \left(Ωt+φ\right)\right)}^{2}}{{\left({δ}_{0}-\hat{x}cos \left(Ωt+δ\right)\right)}^{2}}$ (3)

Ω bezeichnet hier die Drehfrequenz des Rotors 110, wie vorstehend erwähnt, während Îₓ die Amplitude des drehzahlsynchronen Stromanteils bezeichnet und x̂ die Amplitude der Verschiebung bezeichnet. φ und δ sind jeweilige Phasenverschiebungen, während t wie üblich die Zeit bezeichnet. Das vorstehend beschriebene ideale Reduzieren bzw. Eliminieren der synchronen Komponente des Regelstroms Iₓ wird auch als "Current-Nulling" bezeichnet und bewirkt für die Kraftgleichung (3), dass gilt: ${F}_{x , up} = k \frac{{\left({I}_{b}\right)}^{2}}{{\left({δ}_{0}-\hat{x}cos \left(Ωt+δ\right)\right)}^{2}}$ (4)

Selbst wenn eine ideale Current-Nulling-Regelung gemäß Gleichung (4) erreicht wird, bewirkt der Biasstrom I_{b} in Verbindung mit dem drehzahlsynchronen Orbit des Rotors 110, welcher durch den Ausdruck im Nenner von Gleichung (4) beschrieben wird, harmonische Kraftkomponenten. Mit anderen Worten bedingt die nichtlineare Kraftgleichung (4) das Auftreten der harmonischen Kraftkomponenten. Diese können wiederum höhere harmonische Schwingungen anregen, d.h. Schwingungen bei Vielfachen der Grundfrequenz Ω.

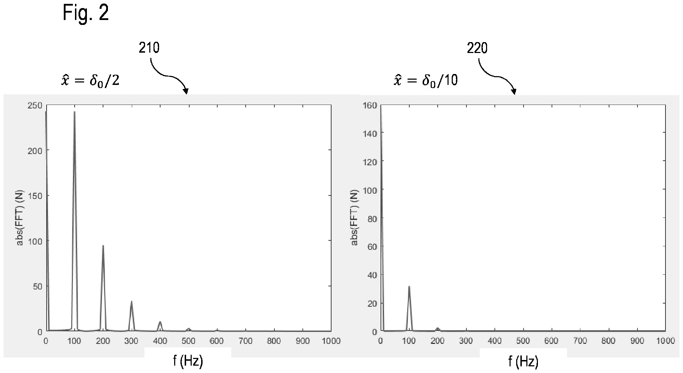

Eine Fourier-Entwicklung von Kräften in dem Magnetlager 120 ist beispielhaft in Fig. 2 gezeigt. In den beiden Diagrammen 210, 220 von Fig. 2 ist jeweils der Absolutbetrag der Fourier-Transformation der Kräfte in Newton (N) in dem Magnetlager 120 über der Frequenz aufgetragen, wobei eine Grundfrequenz von Ω = 100 Hz angenommen wurde. Im linken Diagramm betrug die Amplitude der Grundschwingung der Rotorposition x̂ = δ₀/2, während die Amplitude der Grundschwingung im rechten Diagramm x̂ = δ₀/10 betrug. Man erkennt, dass vor allem bei der höheren Amplitude im linken Diagramm von Fig. 2 erhebliche Amplituden bei den Vielfachen der Grundfrequenz von 100 Hz angeregt wurden. Wie erwähnt ist eine Ursache für die Anregung höherer harmonischer Schwingungen bzw. Kraftanteile, die zur Anregung von Schwingungen führen, die Nichtlinearität des Magnetlagers 120, wie diese beispielsweise durch die Gleichung (4) beschrieben wird.

Durch die Einspeisung eines bestimmten Stromsignals wird die jeweilige Kraft in dem jeweiligen Lagerelement bzw. Elektromagneten 122 erfindungsgemäß minimiert. Ein Stromsignal, mit dem sich dies erreichen lässt, ist beispielsweise folgendermaßen gegeben: ${I}_{x} = {I}_{b} \frac{\hat{x}}{{δ}_{0}} cos \left(Ωt+δ+π\right)$ (5)

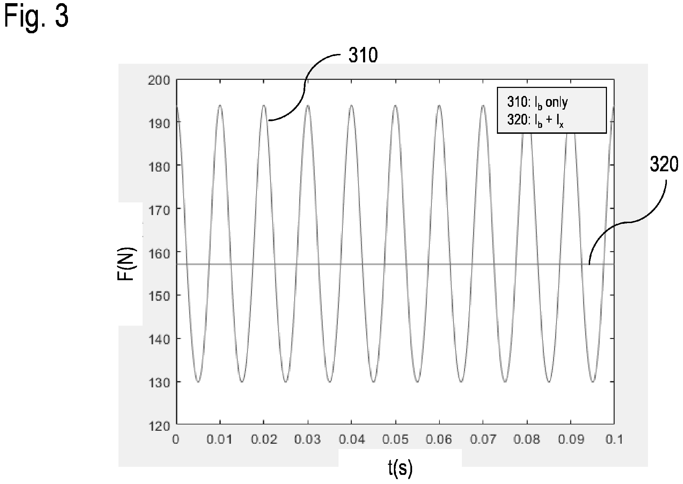

Es wird folglich ein Stromsignal mit einer definierten Phasenverschiebung von π zusätzlich eingespeist bzw. aufgeprägt. Dadurch können die harmonischen Anteile der Kräfte vollständig eliminiert werden, wie dies in Fig. 3 veranschaulicht ist. Im Diagramm von Fig. 3 ist die resultierende Kraft Fₓ in Newton (N) über der Zeit t in Sekunden (s) aufgetragen.

Die Kurve 310 beschreibt den zeitlichen Verlauf der Kraft, ohne dass ein zusätzliches Stromsignal gemäß Gleichung (5) angewendet wird. Aufgrund des Current-Nullings ist die Amplitude der Kraft hauptsächlich durch den Biasstrom I_{b} gegeben (vgl. Gleichung (4)). Bei der Kurve 320 von Fig. 3 wurde jedoch ein zusätzliches Stromsignal gemäß Gleichung (5) eingespeist. Man erkennt, dass die Schwingung entsprechend der Kurve 310 in Kurve 320 aufgrund des eingespeisten Stromsignals nahezu vollständig eliminiert ist.

Fig. 4 zeigt ein Aktivmagnetlager-System 400, das bei der Lagerung der Rotorwelle 112 fünf Freiheitsgrade aufweist. Entlang der Drehachse 114 der Rotorwelle 112 umfasst das Aktivmagnetlager-System 400 in zwei Bereichen A und B jeweils ein radiales Lager mit jeweiligen Elektromagneten bzw. Lagerelementen 122 (A) und 122 (B). Ferner umfasst das Aktivmagnetlager-System 400 in den Bereichen A und B jeweils radiale Fang- oder Notlager 410 (A) und 410 (B). Außerdem sind in den Bereichen A und B jeweilige radiale Positionssensoren 420 (A) bzw. 420 (B) vorgesehen. Mit diesen radialen Sensoren 420 werden jeweilige Verschiebungen x_{seA} und x_{seB}, die in Fig. 4 dargestellt sind, sowie y_{seA} und y_{seB} gemessen, d.h. in der jeweiligen in radialer Richtung verlaufenden xy-Ebene der Sensoren 420 bezogen auf das Koordinatensystem 130 (vgl. auch Fig. 1). Die Darstellung des Magnetlagers 120 von Fig. 1 stellt somit lediglich eine Teilmenge des Aktivmagnetlager-System 400 von Fig. 4 dar, um zunächst einen Freiheitsgrad zu betrachten, wie dies vorstehend beschrieben ist.

Zusätzlich umfasst das Aktivmagnetlager-System 400 von Fig. 4 ein axiales Magnetlager 430 und einen axialen Positionssensor 440. Die Bewegung der Rotorwelle 112 bzw. des gesamten Rotors 110 in der axialen Richtung entlang der Drehachse 114 kann bezogen auf die radiale Richtung als entkoppelt angesehen werden. Daher wird im Folgenden lediglich das radiale Teilsystem des Aktivmagnetlager-Systems 400 mit vier Freiheitsgraden betrachtet. Die vorstehend beschriebenen Gleichungen für die radialen Kräfte (vgl. Fig. 1) lassen sich auf das radiale Teilsystem mit vier Freiheitsgraden sinngemäß übertragen. Dies gilt ebenso für das Stromsignal Iₓ von Gleichung (5) zur Kompensation der Lagerkräfte. Im Einzelnen gilt Folgendes für die Stromsignale in x- und y-Richtung im jeweiligen Bereich A bzw. B: $\begin{matrix}{I}_{x , A} = \frac{{I}_{b , xA}}{{δ}_{0 , xA}} {{{\hat{x}}_{A} cos \left(Ωt+δ+π\right)}_{︸}}_{- {\left.{x}_{A}\right|}_{ω = Ω}} \\ {I}_{x , B} = - \frac{{I}_{b , xB}}{{δ}_{0 , xB}} {\left.{x}_{B}\right|}_{ω = Ω} \\ {I}_{y , A} = - \frac{{I}_{b , yA}}{{δ}_{0 , yA}} {\left.{y}_{A}\right|}_{ω = Ω} \\ {I}_{y , A} = - \frac{{I}_{b , yA}}{{δ}_{0 , yA}} {\left.{y}_{A}\right|}_{ω = Ω}\end{matrix}$ (6)

Die Rotorverschiebungen x_{A}, x_{B}, y_{A}, y_{B} an den Positionen der Elektromagnete bzw. Magnetlagerkomponenten 122 werden mittels der Sensoren 420 jedoch nicht direkt gemessen, da sich die Sensoren 420 und die Magnetlagerelemente bzw. Aktuatoren 122 entlang der Drehachse 114 nicht an derselben Position befinden. Wie man in Fig. 4 erkennen kann, weisen die Magnetlagerelemente bzw. Aktuatoren 122 entlang der Drehachse 114 bezogen auf einen Schwerpunkt (COG) der Rotorwelle 112 eine Distanz a bzw. b auf, die im vorliegenden Ausführungsbeispiel jeweils kleiner ist als die Distanz c bzw. d, welche der jeweilige Positionssensor 420 (A) bzw. 420 (B) entlang der Drehachse 114 bezogen auf den Schwerpunkt (COG) aufweist. Dies ist dadurch bedingt, dass die Sensoren 420 hier in axialer Richtung jeweils außerhalb der Aktuatoren 122 angeordnet sind (vgl. Fig. 4). Es ist jedoch alternativ auch möglich, die Sensoren 420 innerhalb der Aktuatoren 122 anzuordnen, d.h. in axialer Richtung zwischen diesen. In diesem Fall ist die Distanz a bzw. b größer als die entsprechende Distanz c bzw. d.

Die für Gleichung (6) erforderlichen Aktuator- bzw. Rotorverschiebungen können anhand der entsprechenden mit den Positionssensoren 420 gemessenen Werte folgendermaßen ermittelt werden: ${{\left[\begin{matrix}{x}_{A} \\ {x}_{B} \\ {y}_{A} \\ {y}_{B}\end{matrix}\right]}_{︸}}_{{x}_{L}} = {T}_{L} {{\left[\begin{matrix}{x}_{seA} \\ {x}_{seB} \\ {y}_{seA} \\ {y}_{seB}\end{matrix}\right]}_{︸}}_{y}$ (7)

**T**_{L} stellt eine Transformationsmatrix dar, die auf die jeweiligen Sensorsignale **y** angewendet wird, um die Rotorverschiebungen **x**_{L} für Gleichung (6) zu berechnen.

Für die Stromsignale von Gleichung (6) zur Kraftkompensation werden jedoch nur harmonische Anteile der Positionssignale von Gleichung (7) berücksichtigt. Es wäre zwar prinzipiell möglich, auch die durch den Biasstrom I_{b} verursachten Kräfte über einen erweiterten Frequenzbereich zu kompensieren. Ein dafür vorgesehener zusätzlicher Rückführungs- bzw. Regelungspfad würde jedoch die Stabilität des geschlossenen Regelkreises beeinflussen bzw. verringern und das Risiko der Anregung flexibler Moden und einer Destabilisierung durch diese hervorrufen. Daher wird die Kraftkompensation ausschließlich innerhalb eines schmalen Frequenzbandes der Positionssignale durchgeführt.

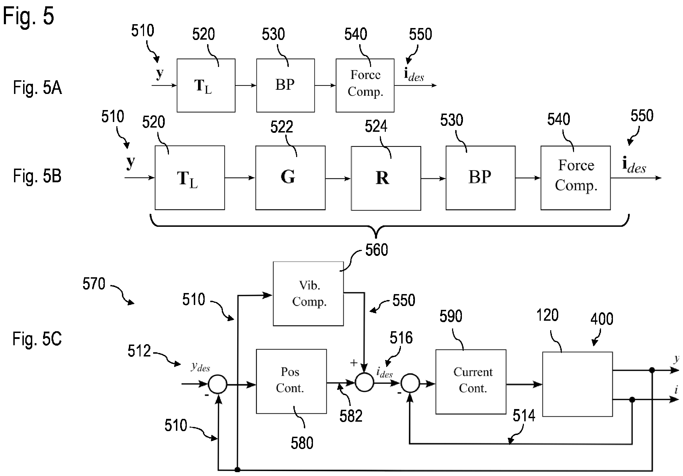

Um diese harmonischen Anteile der Positionssignale zu extrahieren, werden dezentrale Bandpassfilter n-ter Ordnung verwendet. In Fig. 5A ist eine entsprechende ideale Regelungsstruktur dargestellt. Diese umfasst Eingangssignale 510, die mit **y** bezeichnet werden und die Sensorsignale von Gleichung (7) repräsentieren. Gemäß Gleichung (7) wird auf diese Eingangssignale 510 die Transformationsmatrix **T**_{L} bzw. 520 angewendet. Mittels eines Bandpassfilters 530 werden die harmonischen Anteile aus den transformierten Signalen gemäß Gleichung (7) extrahiert. Anschließend erfolgt die Kraftkompensation 540 mittels der Stromsignale, die anhand von Gleichung (6) berechnet werden. Die Stromsignale sind in Fig. 5A mit 550 bzw. i_{des} bezeichnet.

Die ideale Regelungsstruktur von Fig. 5A berücksichtigt jedoch nicht Eingangs- und Ausgangsdynamiken des Systems. Diese umfassen Verzögerungen bei der Ermittlung der Rotorposition bzw. der Positionssignale y und Verzögerungen des resultierenden Regel- oder Stellstroms. Um die Eingangs- und Ausgangsdynamiken zu berücksichtigen, werden definierte Phasenverschiebungen und Verstärkungen eingeführt.

Durch die vorstehend beschriebenen harmonischen Anteile der Positionssignale können diese Phasenverschiebungen und Verstärkungen anhand einer Rotationsmatrix **R** und einer diagonalen Verstärkungsmatrix **G** erfasst werden: $R = \left[\begin{matrix}{cosφ}_{A} & 0 & {sinφ}_{A} & 0 \\ 0 & {cosφ}_{B} & 0 & {sinφ}_{B} \\ - {sinφ}_{A} & 0 & {cosφ}_{A} & 0 \\ 0 & - {sinφ}_{B} & 0 & {cosφ}_{B}\end{matrix}\right]$ (8) $G = diag \left\{{k}_{A}, {k}_{B}, {k}_{A}, {k}_{B}\right\}$ (9)

φ_{A} und φ_{B} sind Phasenwinkel für den jeweiligen Bereich A bzw. B (vgl. Fig. 4), während k_{A} und k_{B} Verstärkungsfaktoren für den jeweiligen Bereich A bzw. B sind. Diese Phasenwinkel und Verstärkungsfaktoren können für das jeweilige Aktivmagnetlager-System 400 bzw. die entsprechende Vakuumpumpe 100 empirisch ermittelt werden.

Fig. 5B zeigt entsprechend eine erweiterte bzw. reale Regelungsstruktur 560, in welche die Verstärkungsmatrix **G** als Block 522 und die Rotationsmatrix **R** als Block 524 zwischen die Transformationsmatrix 520 und das Bandpassfilter 530 eingebunden sind. Anstelle von Filtern, die bei bekannten Systemen eingesetzt werden, verwendet die erfindungsgemäße reale Regelungsstruktur 560 von Fig. 5B lediglich Matrixmultiplikationen. Dadurch wird einerseits eine strukturelle Einfachheit mit einer ausreichenden Systemleistung verbunden und andererseits eine kosteneffiziente Implementierung in einer entsprechenden industriellen Hardware ermöglicht.

Fig. 5C zeigt eine Positionsregelung 570 für die Vakuumpumpe 100 von Fig. 1 bzw. deren aktives Magnetlager 120 bzw. Aktivmagnetlager-System 400 von Fig.4. Die Positionsregelung 570 umfasst einen Positionscontroller 580 und einen Stromcontroller 590, die sequentiell hintereinandergeschaltet sind. Der Positionscontroller 580 empfängt als Stell- bzw. Fehlersignal eine Differenz zwischen den gemessenen Positionssignalen **y** bzw. 510 und Sollwerten für die Positionssignale, die in Fig. 5C mit **y_{des}** bzw. 512 bezeichnet sind. Die Ausgabe des Positionscontrollers 582 umfasst vorläufige Sollwerte für den Strom, die mit 582 bezeichnet sind.

Die reale Regelungsstruktur 560 von Fig. 5B zur Kraft- bzw. Schwingungskompensation ist in die Positionsregelung 570 parallel zu dem Positionscontroller 580 eingebunden. Die Regelungsstruktur 560 wird daher auch als Kompensationsmodul bezeichnet. Wie vorstehend erläutert ist, empfängt die erweiterte Regelungsstruktur 560 ebenso wie der Positionscontroller 580 die Positionssignale bzw. Sensorsignale **y** bzw. 510, die durch Positionsmesssignale gegeben sind (vgl. Gleichung (7)) und letztlich mittels der Sensoren 420 (vgl. Fig. 4) erfasst werden. Darüber hinaus werden Istwerte für die Lagerströme mittels nicht dargestellter Stromsensoren erfasst. Die Istwerte für die Ströme sind in Fig. 5C mit 514 bezeichnet

Die Ausgabe der erweiterten Regelungsstruktur 560, d.h. das Stromsignal 550, wird anschließend mit der Ausgabe 582 des Positionscontrollers 580 kombiniert, so dass kombinierte Signale als Sollwerte i_{des} bzw. 516 für den Stromcontroller 590dienen. Die gemessenen Istwerte 514 für die Lagerströme werden anschließend mit den Sollwerten 516 kombiniert bzw. von diesen subtrahiert, um Stell- bzw. Fehlersignale für den Stromcontroller 590 bereitzustellen. Der Stromcontroller 590 gibt anschließend Spannungen an das aktive Magnetlager 120 bzw. bzw. Aktivmagnetlager-System 400 aus, d.h. an die Lagerelemente 122, wobei aus den Spannungen durch den geschlossenen Regelkreis die geforderten Ströme entstehen.

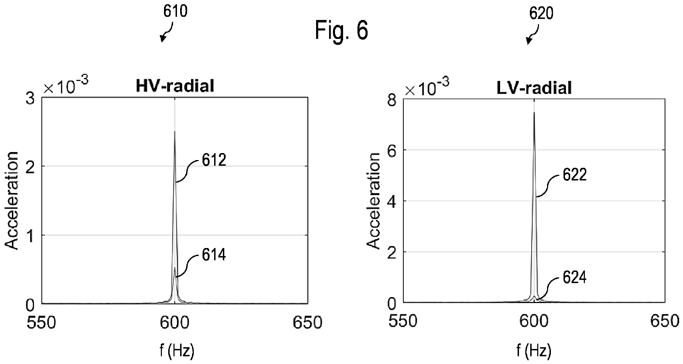

Fig. 6 zeigt experimentelle Ergebnisse, die an einer Turbomolekularpumpe mit aktivem Magnetlager 120 bzw. Aktivmagnetlager-System 400 erhalten wurden. In beiden Diagrammen 610, 620 von Fig. 6 ist eine Beschleunigung (engl. Acceleration) an der y-Achse über der Frequenz in Hz an der x-Achse aufgetragen. Die Beschleunigung wurde an zwei Messstellen an einem Gehäuse der Turbomolekularpumpe bzw. der Vakuumpumpe 100 gemessen, wobei sich die erste Messstelle auf einer Hochvakuumseite HV der Turbomolekularpumpe und die zweite Messstelle auf einer Niederdruckseite LV der Turbomolekularpumpe befand. Die gemessene Beschleunigung liefert ein Maß für die Vibrationen an der ersten bzw. zweiten Messstelle. Das Diagramm 610 zeigt somit die Beschleunigung über der Frequenz für die Hochvakuumseite HV der Turbomolekularpumpe, während das Diagramm 620 die Beschleunigung über der Frequenz für die Niederdruckseite LV der Turbomolekularpumpe zeigt.

Die Kurve 612 in Diagramm 610 repräsentiert die Beschleunigung bei einer Positionsregelung ohne Kraftkompensation, während die Kurve 614 die Beschleunigung bei einer Positionsregelung 570 von Fig. 5 mit der erweiterten Regelungsstruktur 560 repräsentiert. Entsprechend repräsentiert die Kurve 622 des Diagramms 620 die Beschleunigung ohne Kraftkompensation, während die Kurve 624 die Beschleunigung mit der Positionsregelung 570 von Fig. 5 repräsentiert, welche die reale Regelungsstruktur 560 zur Kraftkompensation umfasst.

Wie man anhand der Kurven 614 bzw. 624 im Vergleich zu den Kurven 612 bzw. 622 erkennen kann, werden die maximale Beschleunigung und damit die Vibrationen am Gehäuse der Turbomolekularpumpe mittels der Kraftkompensation durch die erweiterte Regelungsstruktur 560 erheblich verringert. Das Maximum der Kurve 614 mit Kraftkompensation beträgt weniger als ein Viertel des Maximums der Kurve 612 ohne Kraftkompensation. Auf der Niedervakuumseite, für die das Diagramm 620 gültig ist, ist das Maximum der Kurve 624 mit Kraftkompensation im Vergleich zu dem Maximum der Kurve 622 ohne Kraftkompensation sogar nahezu vernachlässigbar.

In dem aktiven Magnetlager 120 (vgl. Fig. 1) bzw. in dem Aktivmagnetlager-System 400 (vgl. Fig. 4) sind zusätzlich zu den harmonischen Kraft- bzw. UnwuchtKomponenten weitere potentielle Schwingungsquellen vorhanden, die Vibrationen innerhalb des Magnetlagers 120 auslösen können. Diese weiteren Schwingungsquellen umfassen beispielsweise einen elektrischen Motor der Vakuumpumpe 100. Ferner können auch Abweichungen an Sensor- und Aktuatorflächen, die durch Fertigungstoleranzen bedingt sind, weitere Schwingungsquellen darstellen. Die durch solche Schwingungsquellen hervorgerufenen Vibrationen können prinzipiell durch eine geeignete Anpassung der Matrizen **R** und **G** (vgl. Fig. 5) berücksichtigt werden, die durch Gleichung (8) und (9) gegeben sind. Eine analytische Ermittlung dieser Anpassungen der Matrizen **R** und **G** ist jedoch im Allgemeinen nicht praktikabel.

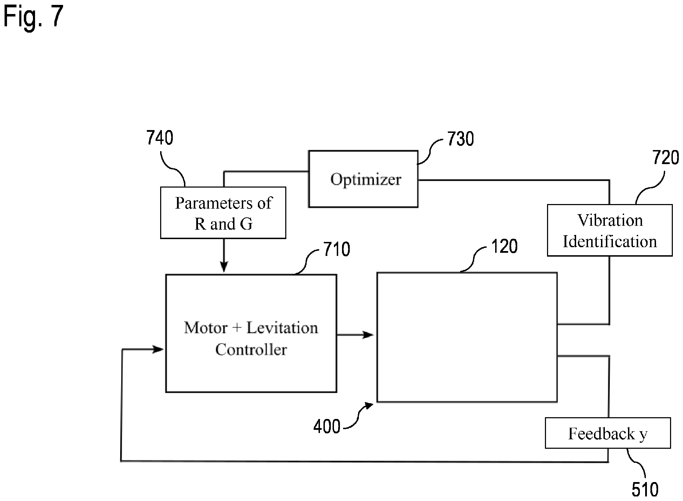

Daher werden experimentelle Verfahren und/oder numerische Simulationen verwendet, um optimale Parameter für die Matrizen **R** und **G** zu ermitteln. Eine beispielhafte Vorgehensweise für eine Anpassung bzw. Optimierung der Matrizen **R** und **G** ist in Fig. 7 dargestellt. Block 710 repräsentiert einen Motor- und Levitationscontroller 710 der Vakuumpumpe 100, der somit einen Antriebsmotor, das Magnetlager 120 und die Positionsregelung 570 der Vakuumpumpe 100 steuert bzw. regelt. Ein solcher Motor- und Levitationscontroller 710 steht mit dem nicht linearen aktiven Magnetlager 120 (vgl. Fig. 1 und 4) in funktionaler Verbindung.

Im Sinne einer Rückkopplung werden bei 720 mögliche Schwingungen an definierten Punkten identifiziert, und das Ergebnis dieser Identifikation wird an einer Optimierungseinrichtung 730 ausgegeben. Die Optimierungseinrichtung 730 ermittelt optimale Parameter für die Matrizen **R** und **G** bei 740. Die optimierten bzw. angepassten Matrizen **R** und **G** werden anschließend in dem Controller 710 verwendet, wie dies vorstehend im Zusammenhang mit Fig. 5 beschrieben ist, d.h. zusätzlich zur Rückkopplung **y** bzw. 510 der Positionsregelung 570. Für die Optimierung der Parameter kann auch ein nicht lineares Finite-Elemente-Modell zur Simulation des Aktivmagnetlager-Systems 400 verwendet werden, um optimierte Parameter für die Matrizen **R** und **G** zu bestimmen. Die Vorgehensweise von Fig. 7 kann auch als experimenteller Ansatz auf einem speziellen Prüfstand durchgeführt werden. Dadurch können die Matrizen **R** und **G** individuell für die jeweilige Vakuumpumpe ermittelt und optimiert werden.

Selbst wenn die Positionsregelung 570 von Fig. 5C mit der realen bzw. erweiterten Regelungsstruktur 560 zur Kraftkompensation verwendet wird, können dennoch bei hohen Drehzahlen des Rotors 110 der Vakuumpumpe 100 weitere harmonische Stromanteile auftreten, die durch eine positionsabhängige Induktivität der Aktuatoren bzw. Lagerelemente 122 (vgl. Fig. 1 und 4) bedingt sind. Für einen Betrieb der Vakuumpumpe 100 bzw. des Rotors 110 bei hohen Drehzahlen gilt folgende Spannungsgleichung: ${u}_{c} = R {i}_{c} + \frac{d \left(L\left(x\left(t\right)\right){i}_{c}\left(t\right)\right)}{dt} = R {i}_{c} + \frac{d L}{d x} \frac{d x}{d t} {i}_{c} + L \frac{d {i}_{c}}{d t}$ (10)

u_{c} bezeichnet die Spannung, R den Widerstand, i_{c} den Spulenstrom, L die Induktivität der jeweiligen Magnetlagerelemente 122, während x die Position des Rotors 110 bezeichnet. Die Induktivität L ist folglich positionsabhängig und kann folgendermaßen angegeben werden: $L = \frac{{μ}_{0} A {N}^{2}}{{δ}_{0} - x}$ (11) wobei A die Querschnittsfläche des Luftspalts des Aktuators 122, N die Windungszahl und δ₀ die nominelle Breite des Luftspalts bezeichnet.

Wenn man Gleichung (11) in Gleichung (10) einsetzt, erhält man: ${{i}_{c}}^{⋅} = \frac{\left(R {i}_{c}-{u}_{c}\right) {\left({δ}_{0}-x\right)}^{2} + {i}_{c} {μ}_{0} A {N}^{2} \dot{x}}{\left(x-{δ}_{0}\right) {μ}_{0} A {N}^{2}}$ (12)

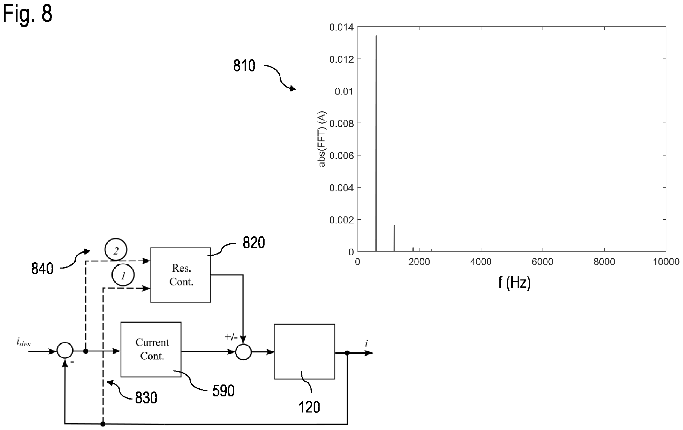

Gleichung (12) beschreibt offensichtlich ein nicht lineares System. Fig. 8 zeigt im Diagramm 810 oben eine Fourier-Analyse des Spulenstroms, wobei für die Rotorposition x = A * sin(2 *π* · 600 Hz · t) angenommen wurde. Man erkennt in Diagramm 810, dass wiederum harmonische Komponenten vorhanden sind, d.h. Amplituden bei Vielfachen der Grundfrequenz von 600 Hz, die durch die positionsabhängige Induktivität L hervorgerufen werden.

Solche drehzahlsynchronen Ströme können durch eine Regelung mit theoretisch unendlicher Verstärkung bei der Drehfrequenz ω₀ des Rotors 110 unterdrückt werden. Dies lässt sich durch einen Resonanzregler realisieren, der folgende Übertragungsfunktion G aufweist: ${G}_{R} \left(s\right) = \frac{{K}_{r} s}{{s}^{2} + {ω}_{0}^{2}}$ (13)

Das Blockdiagramm in Fig. 8 unten veranschaulicht die Einbindung eines Resonanzreglers 820 in die Regelung des Stroms mittels des Stromcontrollers 590. Am Eingang des Resonanzreglers 820 können zwei verschiedene Signalpfade verwendet werden. Ein erster Signalpfad 830 verwendet eine synchrone Komponente der Stromrückkopplung bei der Frequenz ω₀. Diese synchrone Komponente wird mittels des Resonanzreglers 820 theoretisch betrachtet unendlich verstärkt und dadurch kompensiert. Bei dem zweiten Pfad 840 hingegen wird am Eingang des Resonanzreglers 820 ein Stellsignal bzw. Fehlersignal angewendet, das anhand einer Differenz zwischen der Stromrückkopplung und einem Sollwert i_{des} für den Strom gegeben ist. Bei der Verwendung eines solchen Stellsignals bzw. Fehlersignals kann ein ideales Führungsverhalten des Rotors 110 bei der Frequenz ω₀ erreicht werden. Ein solches ideales Führungsverhalten ist insbesondere dann vorteilhaft, wenn der Resonanzregler 820 zusätzlich in die Positionsregelung 570 von Fig. 5 eingebunden wird.

Gleichung (13) beschreibt einen einfachen Resonanzregler, der in der Praxis jedoch zu Stabilitäts- und Performanceproblemen führen kann. Solche Probleme können jedoch durch eine verallgemeinerte Ausführung des Resonanzreglers 820 verringert werden, die folgendermaßen gegeben ist: ${G}_{R} \left(s\right) = \frac{{sK}_{1} - {ω}_{0} {K}_{1}}{{s}^{2} + {ω}_{0}^{2}}$ (14)

Wenn die Frequenz des Signals am Eingang des Resonanzreglers 820 variiert, kann zusätzlich eine Dämpfung in den Resonanzregler eingebunden werden: ${G}_{R} \left(s\right) = \frac{2 {K}_{1} {ω}_{c} s}{{s}^{2} + 2 {ω}_{c} s + {ω}_{0}^{2}}$ (15)

Die Dämpfung ist durch den Term 2ω_{c}s im Nenner von Gleichung (15) realisiert. Durch die Dämpfung kann die Robustheit des Resonanzreglers 820 verbessert werden.

### Bezugszeichenliste

- 100: Vakuumpumpe
- 110: Rotor
- 112: Rotorwelle
- 114: Drehachse des Rotors
- 120: aktives Magnetlager
- 122: Lagerkomponente bzw. Elektromagnet
- 122-1: obere Lagerkomponente
- 122-2: untere Lagerkomponente
- 124: Magnetspule
- 126: Kern
- 128: Flusskomponente
- 130: Koordinatensystem
- 210: Fourier-Analyse für δ₀/2
- 220: Fourier-Analyse für δ₀/10
- 310: Kraft ohne Stromsignal für Kompensation
- 320: Kraft mit Stromsignal zur Kompensation
- 400: Aktivmagnetlager-System
- 410: Not- bzw. Fanglager
- 420: radialer Positionssensor
- 430: axiales Magnetlager
- 440: axialer Positionssensor
- 510: mit den Sensoren gemessene Positionssignale bzw. deren Istwerte
- 512: Sollwerte für die Positionssignale
- 514: gemessene Istwerte für die Lagerströme
- 516: Sollwerte für die Lagerströme
- 520: Transformationsmatrix
- 522: Verstärkungsmatrix
- 524: Rotationsmatrix
- 530: Bandpassfilter
- 540: Kraftkompensation
- 550: Stromsignal
- 560: Regelungsstruktur zur Kraftkompensation, Kompensationsmodul
- 570: Positionsregelung
- 580: Positionscontroller
- 582: Ausgabe des Positionscontrollers
- 590: Stromcontroller
- 610: Diagramm für die Beschleunigung auf der Hochvakuumseite
- 620: Diagramm für die Beschleunigung auf der Niedervakuumseite
- 710: Motor- und Elevationscontroller
- 720: Schwingungsidentifikation
- 730: Optimierungseinrichtung
- 740: Parameter für die Verstärkungsmatrix und die Rotationsmatrix
- 810: Diagramm für harmonische Anteile des Stromsignals
- 820: Resonanzregler
- 830: erster Eingangspfad des Resonanzreglers mit Rückführungssignal
- 840: zweiter Eingangspfad des Resonanzreglers mit Stell- bzw. Fehlersignal

## Patentansprüche

1. Vakuumpumpe (100), insbesondere Turbomolekularpumpe, umfassend:
einen Rotor (110),
ein aktives Magnetlager (120, 400) und
eine Positionsregelung (570), die mit dem aktiven Magnetlager (120, 400) in funktionaler Verbindung steht, um den Rotor (110) während des Betriebs der Vakuumpumpe (100) mittels des aktiven Magnetlagers (120, 400) in einer vorbestimmten räumlichen Lage zu halten,
wobei
die Positionsregelung (570) mindestens einen Regelstrom für das Magnetlager (120, 400) derart regelt, dass eine Stromkomponente eines Soll-Regelstroms in mindestens einem vorbestimmten Frequenzbereich reduziert ist, und
die Positionsregelung (570) ein Kompensationsmodul (560) umfasst, das mindestens ein gemessenes Positionssignal (510) für eine Position des Rotors (110) empfängt, eine Positionskomponente des Positionssignals (510) in dem vorbestimmten Frequenzbereich extrahiert und anhand der extrahierten Positionskomponente ein Stromsignal zur Kompensation von Kraftkomponenten innerhalb des Magnetlagers (120, 400) berechnet.

2. Vakuumpumpe (100) nach Anspruch 1, wobei
die Stromkomponente des Soll-Regelstroms in dem mindestens einen vorbestimmten Frequenzbereich eine synchrone Stromkomponente und/oder höhere Harmonische der synchronen Stromkomponente umfasst und
das Kompensationsmodul (560) anhand der extrahierten Positionskomponente ein Stromsignal zur Kompensation harmonischer Kraftkomponenten innerhalb des Magnetlagers (120, 400) berechnet.

3. Vakuumpumpe (100) nach Anspruch 1 oder 2, wobei
die Positionsregelung (570) einen Positionscontroller (580) und einen Stromcontroller (590) umfasst, die sequentiell miteinander in Verbindung stehen, und
das Kompensationsmodul (560) parallel zu dem Positionscontroller (580) geschaltet ist, um einen parallelen Regelungspfad zu erzeugen, und
der Stromcontroller (590) eine kombinierte Ausgabe des Positionscontrollers (580) und des parallelen Regelungspfades empfängt.

4. Vakuumpumpe (100) einem der vorstehenden Ansprüche, wobei das Stromsignal vordefinierte Phasenverschiebungen und vordefinierte Verstärkungen umfasst, um anhand der Phasenverschiebungen und Verstärkungen jeweilige Verzögerungen bei der Messung des Positionssignals (510) und bei einer Anwendung eines Signals des Regelstroms auszugleichen.

5. Vakuumpumpe (100) nach Anspruch 4, wobei
das Kompensationsmodul (560) die Phasenverschiebungen mittels einer Rotationsmatrix (524) und die Verstärkungen mittels einer Verstärkungsmatrix (522) darstellt.

6. Vakuumpumpe (100) nach Anspruch 5, wobei
die Rotationsmatrix (524) und die Verstärkungsmatrix (522) anpassbar sind, um den Einfluss zusätzlicher Schwingungsquellen zu berücksichtigen.

7. Vakuumpumpe (100) nach Anspruch 6, wobei
das Kompensationsmodul (560) ferner ausgebildet ist, eine jeweilige zusätzliche Schwingungsquelle experimentell zu identifizieren und die Rotationsmatrix (524) sowie die Verstärkungsmatrix (522) anhand optimierter Parameter anzupassen, die für die jeweils identifizierte zusätzliche Schwingungsquelle ermittelt werden.

8. Vakuumpumpe (100) nach Anspruch 6 oder 7, wobei
die Vakuumpumpe ferner mindestens einen Schwingungssensor umfasst, der an einer jeweiligen Referenzposition angebracht ist, die sich insbesondere in oder an der Vakuumpumpe (100) und/oder an einer der Vakuumpumpe zugeordneten Applikation befindet, und der ein Schwingungssignal ausgibt, und
die Rotationsmatrix (524) und die Verstärkungsmatrix (522) während eines Betriebs der Vakuumpumpe (100) anhand des Schwingungssignals anpassbar sind.

9. Vakuumpumpe (100) nach einem der vorstehenden Ansprüche, wobei das Kompensationsmodul (560) mindestens zwei gemessene Positionssignale (510) empfängt und eine Transformationsmatrix (520) auf die gemessenen Positionssignale (510) anwendet.

10. Vakuumpumpe (100) nach einem der vorstehenden Ansprüche, wobei das Kompensationsmodul ein Bandpassfilter (530) umfasst.

11. Vakuumpumpe (100) nach einem der vorstehenden Ansprüche, wobei die Positionsregelung (570) ferner einen Induktivitäts-Regelungspfad umfasst, der eine positionsabhängige Induktivität von Aktuatoren (122) innerhalb des aktiven Magnetlagers (120, 400) berücksichtigt.

12. Vakuumpumpe (100) nach Anspruch 11, wobei
der Induktivitäts-Regelungspfad mindestens einen Resonanzregler (820) umfasst.

13. Vakuumpumpe (100) nach Anspruch 12, wobei
der Resonanzregler (820) eine zusätzliche Dämpfung umfasst.

14. Vakuumpumpe (100) nach einem der Ansprüche 11 bis 13, wobei der Induktivitäts-Regelungspfad als Eingangssignal einen Istwert mindestens eines Stroms oder eine Regeldifferenz mindestens eines Stroms innerhalb des Magnetlagers (120, 400) empfängt.

15. Verfahren zum Regeln einer Position eines Rotors (110) einer Vakuumpumpe (100), insbesondere einer Turbomolekularpumpe, wobei die Vakuumpumpe (100) den Rotor (110), ein aktives Magnetlager (120, 400) und eine Positionsregelung (570) für den Rotor (110) umfasst, die mit dem Magnetlager (120, 400) in einer funktionalen Verbindung steht,
wobei das Verfahren umfasst, dass:
der Rotor (110) während des Betriebs der Vakuumpumpe (100) mittels des Magnetlagers (120, 400) und der Positionsregelung (570) in einer vorbestimmten räumlichen Lage gehalten wird,
mindestens ein Regelstrom für das Magnetlager (120, 400) mittels der Positionsregelung (570) derart geregelt wird, dass eine Stromkomponente eines Soll-Regelstroms in mindestens einem vorbestimmten Frequenzbereich reduziert wird, und
in einem Kompensationsmodul (560) der Positionsregelung (570) mindestens ein gemessenes Positionssignal (510) für eine Position des Rotors (110) empfangen wird, eine Positionskomponente des Positionssignals (510) in dem vorbestimmten Frequenzbereich extrahiert wird und anhand der extrahierten Positionskomponente ein Stromsignal zur Kompensation von Kraftkomponenten innerhalb des Magnetlagers (120, 400) berechnet wird.
